Europäisches Patentamt

European Patent Office

Office européen des brevets

(11) Publication number: **0 443 490 A1**

## EUROPEAN PATENT APPLICATION

(21) Application number: **91102275.4**

(22) Date of filing: **18.02.91**

(51) Int. Cl.⁵: **C04B 35/58**

(30) Priority: **19.02.90 IT 1940990**

(43) Date of publication of application:
**28.08.91 Bulletin 91/35**

(84) Designated Contracting States:
**CH DE ES FR GB LI NL SE**

(71) Applicant: **KERAMONT ITALIA S.p.A.**
**31, Foro Buonaparte**
**I-20121 Milan(IT)**

(72) Inventor: **Giunchi, Giovanni**
**15, Via Don Gallotti**
**I-28100 Novara(IT)**
Inventor: **Savrun, Ender**
**5675 N. Camino Esplendora, Apt. 1200**
**Tucson, Arizona 85718(US)**
Inventor: **Grenni, Alberto**
**203, Via F.lli Cervi, Residenza Fontana**
**I-20090 Segrate Milano(IT)**
Inventor: **Chen, Ching-Fong**
**4271 W. Woodridge Lane**
**Tucson, Arizona 85741(US)**

(74) Representative: **Weinhold, Peter, Dr. et al**
**Patentanwälte Dipl.-Ing. G. Dannenberg Dr.**
**P. Weinhold Dr. D. Gudel Dipl.-Ing. S.**
**Schubert Dr. P. Barz Siegfriedstrasse 8**
**W-8000 München 40(DE)**

(54) **Refractory and electroconductive ceramic compositions and process for the preparation thereof.**

(57) Described are refractory and electroconductive ceramic compositions having a density higher than 4 g/cm³, an ultimate tensile strength higher than 250 MPa, a Vickers micro-hardness higher than 1000 kg/mm² and an electric resistivity lower than 600 microohm.cm, essentially consisting of alumina and a nitride of at least one transition metal of groups IVB, VB and VIB of the Periodic System.

EP 0 443 490 A1

## REFRACTORY AND ELECTROCONDUCTIVE CERAMIC COMPOSITIONS AND PROCESS FOR THE PREPARATION THEREOF

The present invention relates to electroconductive ceramic compositions and to a process for the preparation thereof.

It is known, e.g., from "Journal of Materials Science" 20 (1985), page 3697, "Ceramics International" 15 (1989), page 271 and "Journal of Material Science" 16 (1981), page 2997, that at high temperatures reactions of the type

(1)  $AlN + ZrO_2 \rightarrow Al_2O_3 + ZrN + N_2$ + other crystalline phases

(2)  $AlN + TiO_2 \rightarrow Al_2O_3 + TiN + N_2$ + other crystalline phases

may take place. In the above reactions, the term "other crystalline phases" is to denote suboxides or oxynitrides, in different valence states of the corresponding metals.

It is also known that materials of the metal nitride type such as, for instance, zirconium or titanium nitride are good electroconductive materials and have a hardness and tribologic characteristics which make them suitable for use in ceramic composite materials useful as anti-wear materials, for instance in coatings of inserts for cutting tools.

To this end powders of metal nitrides and alumina having suitable granulometries can be mixed intimately and sintered at high temperatures and under pressure or can be deposited on the material surfaces by techniques such as "physical vapour deposition".

On the other hand, ceramic compositions obtained by reactions (1) and (2) are not suitable for practical use in that they have unsatisfactory mechanical and electrical characteristics which are not very stable or controllable.

It has now surprisingly been found that if reactions of the type (1) and (2) are carried out under suitable process conditions, it is possible to obtain compositions, essentially consisting of alumina and metal nitrides, which have a high density and show a homogeneous and isotropic distribution of the components.

The thus obtained compositions are suitable for practical applications in that they are endowed with mechanical and tribologic properties better than those of analogous compositions obtained by the above mentioned conventional sintering processes and, moreover, can be processed by spark erosion techniques.

Therefore, the present invention provides refractory and electroconductive compositions obtainable by reactive sintering of aluminium nitride with at least one oxide of a transition metal selected from those belonging to groups IVB, VB and VIB of the Periodic System of Elements, at a temperature of at least (and preferably higher than) 1450° C and under a pressure higher than or equal to 10 MPa.

At the end of the reactive sintering, the ceramic composition of the present invention essentially consists of an oxide component, essentially represented by alumina, and of a nitride component, essentially represented by at least one nitride of at least one transition metal of groups IVB, VB and VIB.

Among the ceramic compositions of the present invention those having an oxide component content of from 20 to 80% b.w., generally of from 40 to 60%, and a nitride component content of from 80 to 20% b.w., generally of from 60 to 40%,are preferred.

Compositions wherein the nitride component contains one, two or three nitrides of one, two or three transition metals are also comprised in the scope of the present invention.

The transition metals present in the ceramic compositions of the present invention are those belonging to groups IVB, VB and VIB of the Periodic System; preferred metals are titanium, zirconium, hafnium, vanadium, niobium and tantalium, particularly titanium.

The ceramic compositions of the present invention are highly refractory in that they have melting temperatures equal to or higher than 2000° C, generally of from 2000 to 2500° C, and are characterized by a continuous nitride phase which makes them highly electroconductive at room temperature; they may be endowed with superconductive properties at temperatures higher than the hydrogen liquefaction temperature.

The present ceramic compositions generally have a density higher than or equal to 4 g/cm³, usually of from 4 to 10 g/cm³, a densification higher than 90%, usually of from 95 to 99.9%, an ultimate tensile strength, measured according to U.S. Military Standard 1942 (MR), higher than 250 MPa, usually of from 300 to 600 MPa, a Vickers micro-hardness, measured according to ASTM E-384, higher than 1000 kg/mm², usually of from 1200 to 2500 kg/mm² and an electric resistivity, measured according to ASTM F-43, lower than 600 microohm.cm, usually of from 400 to 100 microohm.cm.

The compositions of the present invention can be used in thermotechnique as resistors for furnaces, crucibles for the evaporation of metals, etc., in mechanical processing as materials for tools, in mechanical components as anti-wear and antistatic materials, in space technology as coating for space apparatus, etc. or as shaped bodies.

A process for the preparation of said refractory and electroconductive ceramic compositions comprises:

(a) mixing aluminium nitride with at least one oxide of a transition metal selected from those belonging to groups IVB, VB and VIB of the Periodic System; and

(b) allowing the thus obtained mixture to react at a temperature of at least 1450°C, preferable higher than or equal to 1500°C, and under a pressure higher than or equal to 10 MPa.

According to a preferred embodiment of the process of the present invention, in step (a) the aluminium nitride is mixed with one oxide of a transition metal or, optionally, with two or three oxides.

The weight ratio among the oxides varies according to the desired characteristics of the final product.

Both the aluminium nitride and the metal oxides are preferably used in the form of powders having a granulometry lower than 5 μm, generally of from 0.5 to 2 μm and with AlN/oxide ratios such as to obtain, in the final ceramic composition, the above indicated contents of oxide component and nitride component. A molar ratio AlN/total oxides of higher than or equal to 4/3, preferably of from 4/3 to 2/1, is most advantageously used.

The mixing of the powders can be performed in dry or in wet condition according to techniques well-known to those skilled in the art.

If the mixing is carried out in wet condition, as dispersing agent organic liquids can be used, such as acetone, (preferably $C_1$-$C_6$) alcohols, aliphatic hydrocarbons containing a low number of (e.g. 5 to 8) carbon atoms, such as hexane, etc.

It is also possible to optionally use binders which can be solubilized or dispersed in the liquid base and are subject to degradation during the reaction/sintering step.

Examples of suitable binders are those generally used for ceramic powders, such as polyvinylbutyral.

The mixture, after evaporation of the solvent, can be directly introduced into the sintering die, either as powder or in the form of a pre-shaped body.

Alternatively, for objects having a complicated shape or large dimensions, the mixture can be pre-stiffened according to the various techniques used for the forming of ceramic materials and then sintered, after having removed the organic components under inert gas pressure (Hot isostatic press).

The shaped article is sintered according to step (b), at a temperature preferably ranging from 1450 to 1950°C, or in an atmosphere controlled by inert gases, such as nitrogen, argon, etc., at high pressure, preferably of from 15 to 300 MPa, or under vacuum and with a mechanical pressure preferably ranging from 10 to 50 MPa.

The sintering times are generally higher than 30 minutes and preferably range from 45 to 120 minutes.

The powders which usually make up the reaction mixture preferably have a purity of at least 96% and are readily available on the market.

Some illustrative but not limitative examples of embodiments of the present invention are given hereinafter.

EXAMPLE 1

A mixture of 57.15 mole-% AlN and 42.85 mole-% $TiO_2$, both components having purities higher than 99.5% and an average granulometry of 1.5 μm was prepared by wet milling in acetone, using $Al_2O_3$ marbles and a polyethylene jar. After having evaporated the solvent under reduced pressure, the powder was stiffened in a graphite die (coated with boron nitride powder) by uniaxial compression at 6 MPa. By mechanical pressing at 20 MPa and under vacuum at 1550°C for 60 minutes, a composite having a density of 4.35 g/cm³, with a 95.4% densification, and being electroconductive, with a resistivity of 360 microohm.cm, was obtained.

The bending stress resistance at 4 points was 436 MPa and the Vickers micro-hardness was 1963 kg/mm².

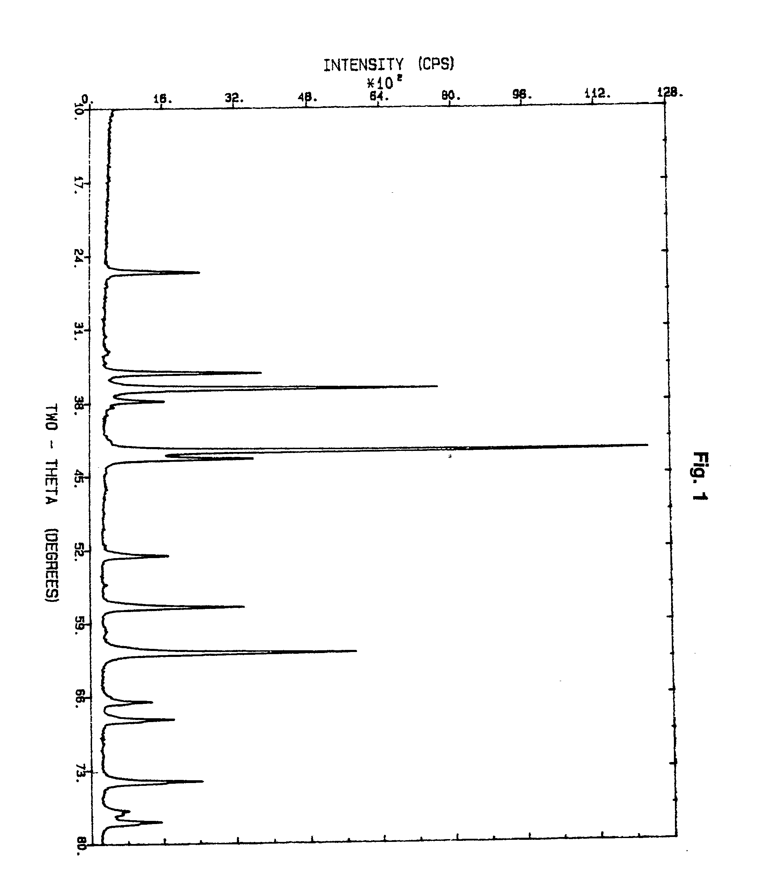

The crystalline phases in the thus obtained composite were identified by X-ray diffraction which showed only the presence of alpha-$Al_2O_3$ and TiN as illustrated in Fig.1.

EXAMPLE 2

A mixture of 57.15 mole-% AlN, 31.07 mole-% $TiO_2$ and 11.78 mole-% $ZrO_2$, said three components all having purities higher than 99.5% and average granulometries of about 1.5 μm, was prepared by wet milling in acetone, using $Al_2O_3$ marbles and a polyethylene jar. After having evaporated the solvent under reduced pressure, the powder was pressed in a graphite die by uniaxial compression at 6 MPa. By mechanical pressing at 40 MPa and under vacuum, at 1550°C for 1 hour, an electroconductive composite having a density of 4.34 g/cm³ was obtained.

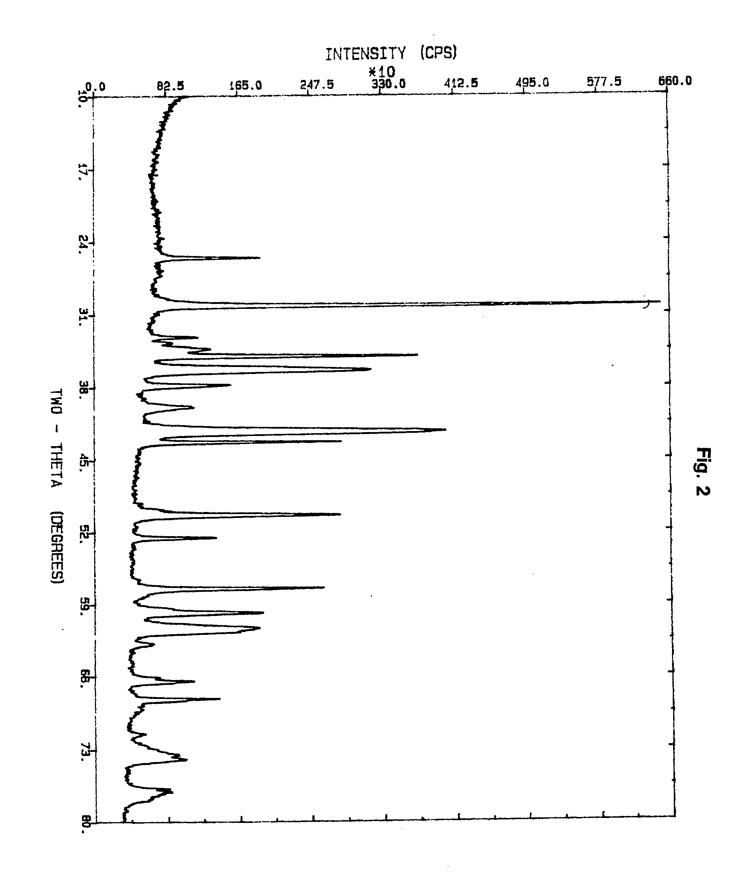

The bending stress resistance at 4 points was 341 MPa and the Vickers micro-hardness of said composite was 1260 kg/mm². The crystalline phases in the thus obtained composite were identified by X-ray diffraction as illustrated by the diagram of Fig. 2.

EXAMPLE 3

A mixture of 57.15 mole-% AlN and 42.85 mole-% $ZrO_2$, both having a purity higher than 99% and an average granulometry of about 2 $\mu$m was prepared by wet milling in acetone, using $Al_2O_3$ marbles and a polyethylene jar. After having evaporated the solvent under reduced pressure, the powder was pressed in a graphite die by uniaxial compression at 6 MPa.

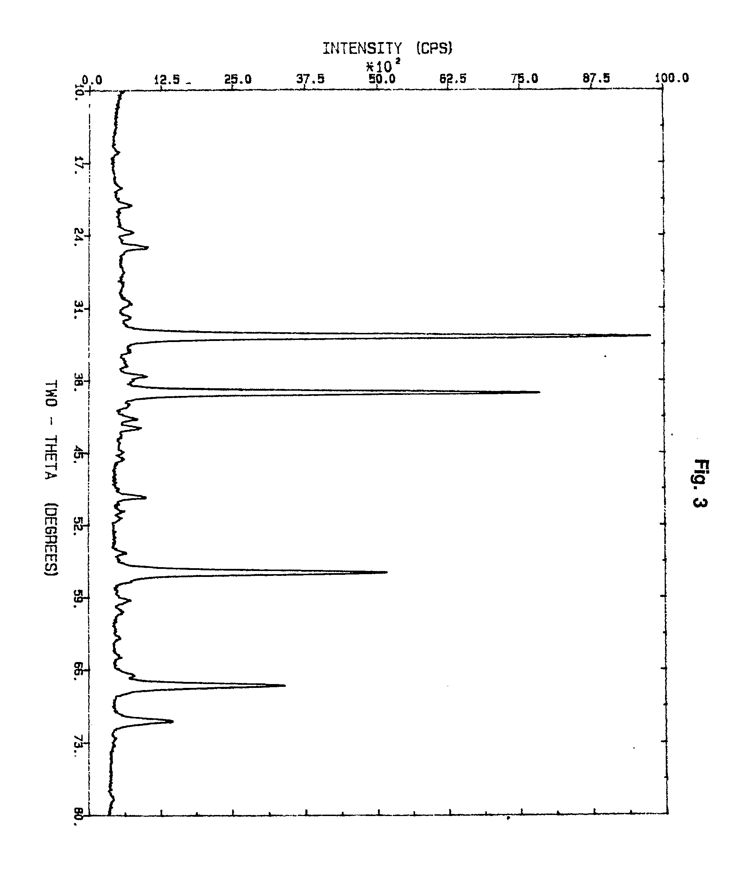

By mechanical pressing at 40 MPa and under vacuum at 1700°C for 1 hour, a composite having a density of 4.88 $g/cm^3$ was obtained; the electric resistivity thereof was 590 microohm.cm and the Vickers micro-hardness was 1530 $kg/mm^2$. In the obtained product, both the oxide component and the nitride component were intimately mixed to give only one crystalline oxynitride phase of the cubic type, as evidenced by the X-ray diffraction diagram of Fig. 3.

EXAMPLE 4

A mixture of 57.15 mole-% AlN, 35.41 mol-% $TiO_2$ and 7.44 mole-% $Nb_2O_5$, all three components having a purity higher than 99% and a granulometry of about 1.5 $\mu$m, was prepared as described in the preceding examples and pressed under vacuum at a pressure of 40 MPa and at a temperature of 1550°C for 1 hour.

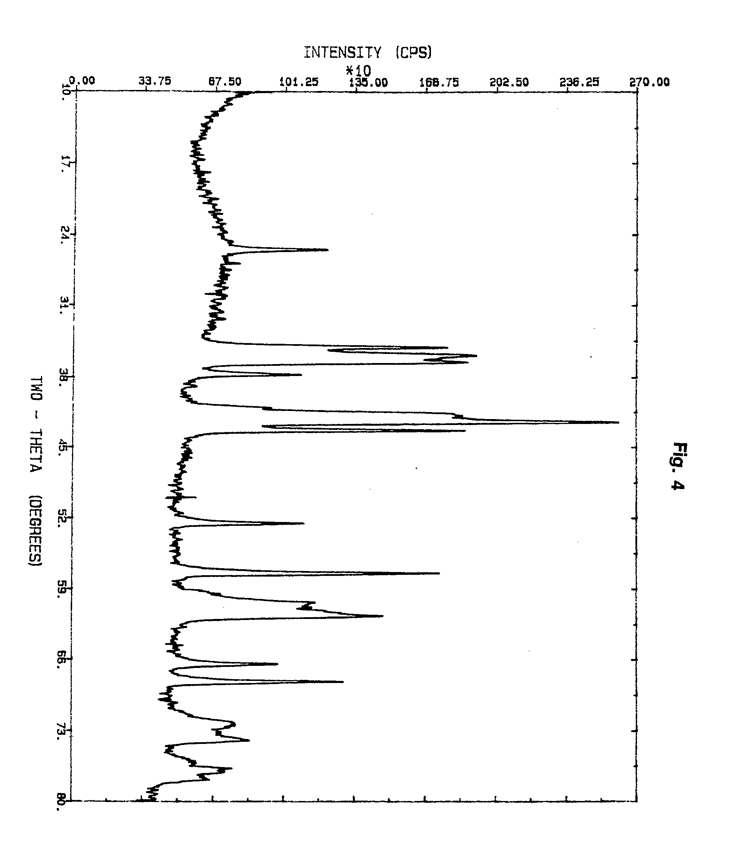

A composite having a density of 4.66 $g/cm^3$, an electric resistivity of 574 microohm.cm and a Vickers micro-hardness of 1420 $kg/mm^2$ was thus obtained, said composite consisting of alpha-$Al_2O_3$ and a mixture of nitride phases of the cubic type as shown by the X-ray diffraction diagram of Fig. 4.

**Claims**

1. Refractory and electroconductive ceramic compositions, obtainable by reactive sintering of aluminium nitride with at least one oxide of a transition metal of groups IVB, VB and VIB of the Periodic System at a temperature of at least 1450°C and a pressure of at least 10 MPa.

2. Compositions according to claim 1, essentially consisting of an oxide component, essentially represented by alumina, and of a nitride component, essentially represented by at least one nitride of at least one transition metal of groups IVB, VB and VIB, said oxide component being preferably present in amounts of from 20 to 80% by weight and said nitride component being preferably present in amounts of from 80 to 20% by weight.

3. Compositions according to any one of the preceding claims, wherein the nitride component contains one, two or three nitrides of one, two or three transition metals.

4. Compositions according to any one of the preceding claims, wherein the transition metal is selected from one or more of titanium, zirconium, hafnium, vanadium, niobium and tantalium, and particularly is titanium.

5. Process for the preparation of the compositions of any one of the preceding claims which comprises:
   (a) mixing aluminium nitride with at least one, and particularly one, two or three oxides of transition metals of groups IVB, VB and VIB of the Periodic System, the molar ratio AlN/total oxides being preferably at least 4/3; and
   (b) allowing the mixture thus obtained to react at a temperature of at least 1450°C, preferably at least 1500°C, and at a pressure of at least 10 MPa.

6. Process according to claim 5, wherein the aluminium nitride and the metal oxide(s) are used in the form of powders having average particle sizes of less than 5 $\mu$m, particularly of from 0.5 to 2 $\mu$m.

7. Process according to any one of claims 5 and 6, wherein the mixing is carried out in dry or wet condition.

8. Process according to any one of claims 5 to 7, wherein the sintering of step (b) is carried out (i) at a temperature of from 1450 to 1950°C under an atmosphere controlled by inert gases at a pressure of from 15 to 300 MPa or (ii) under vacuum and with a mechanical pressure of from 10 to 50 MPa.

9. Process according to any one of claims 5 to 8, wherein the sintering times are longer than 30 minutes and particularly range from 45 to 120 minutes.

10. Process according to any one of claims 5 to 9, wherein the reagents employed have a purity of at least 96%.

11. Use of the compositions of any one of claims 1 to 4 in thermotechnique, in mechanical processing, in the mechanical component industry, and in space technology.

12. Shaped bodies of the compositions of any one of claims 1 to 4.

Fig. 1

Fig. 2

EP 0 443 490 A1

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DERWENT ACCESSSION NO. 88-105 709, Questel Telesystem (WPIL) DERWENT PUBLICATIONS LTD., London * Abstract * & BR-A-86-3 285 (CERAMICA E VELAS DE IGNICAO NGK DO BRASIL S.A.) -- | 1,4, 11,12 | C 04 B 35/58 |
| X | DERWENT ACCESSION NO. 89-196 385, Questel Telesystem (WPIL) DERWENT PUBLICATIONS LTD., London * Abstract * & JP-A-1-133 968 (SUMITOMO ELEC. IND. KK) -- | 1-4,7, 11,12 | |
| X | DE - A1 - 3 337 630 (W.C. HERAEUS GMBH) * Totality * -- | 1-12 | |
| X | EP - A2 - 0 279 518 (KERAMONT ADVANCED CERAMIC PRODUCTS CORPORATION) * Claims * -- | 1,4-6, 8,11, 12 | **TECHNICAL FIELDS SEARCHED (Int. Cl.5)** C 04 B H 01 B |
| X | EP - A2 - 0 276 149 (KERAMONT ADVANCED CERAMIC PRODUCTS CORPORATION) * Totality * -- | 1,5-12 | |
| A | EP - A2 - 0 207 465 (KABUSHIKI KAISHA TOSHIBA) * Claims * ---- | 1-12 | |

The present search report has been drawn up for all claims

| Place of search | Date of completion of the search | Examiner |
|---|---|---|
| VIENNA | 15-05-1991 | BECK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)